# FASCICULE DE BREVET EUROPEEN

(11) **EP 3 380 340 B1**
(45) Date de publication et mention de la délivrance du brevet: **17.03.2021**
(21) Numéro de dépôt: 16813011.0
(22) Date de dépôt: 24.11.2016
(51) Int. Cl.: C08L 9/00, B60C 1/00, C08K 3/06, C08K 3/22, C08K 3/36, C08K 5/05, C08K 5/09, C08K 5/3445, C08K 5/47, C08K 5/548

(54) **COMPOSITION DE CAOUTCHOUC**
KAUTSCHUKZUSAMMENSETZUNG
RUBBER COMPOSITION

(30) Priorité: 27.11.2015 FR 1561449
(43) Date de publication de la demande: 03.10.2018
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR); SALIT, Anne-Frédérique, 63040 Clermont-Ferrand Cedex 9 (FR); BELZ, Justin, 63040 Clermont-Ferrand Cedex 9 (FR)
(74) Mandataire: Gandon-Pain, Sylvie
(86) Numéro de dépôt international: PCT/FR2016/053067
(87) Numéro de publication internationale: WO 2017/089706

(56) Documents cités:
- WO-A1-2012/007442
- WO-A1-2014/090756

## Description

La présente invention concerne les compositions de caoutchouc diénique renforcées par une charge et utilisable notamment pour la fabrication de pneumatiques.

Dans l'industrie de l'automobile, il est recherché des pneumatiques à faible résistance au roulement ou à faible échauffement au cours du roulage. La première performance peut être recherchée pour réduire la consommation en carburant, la seconde pour augmenter l'endurance du pneumatique.

Des pneumatiques à faible résistance au roulement ou à faible échauffement peuvent être obtenus grâce à l'utilisation de composition de caoutchouc faiblement hystérétiques. L'obtention de composition de caoutchouc faiblement hystérétique peut se faire de différentes façons. L'une d'elle consiste à utiliser dans la composition de caoutchouc des agents de couplage qui permettent d'améliorer l'interaction entre l'élastomère et la charge renforçante de la composition de caoutchouc. Alternativement, il peut être utilisé dans la composition de caoutchouc des élastomères portant une fonction interactive vis-à-vis de la charge renforçante de la composition de caoutchouc.

En particulier, il est connu des demandes de brevet WO 2012/007442 A1 et WO 2014/090756 A1 d'utiliser un composé 1,3-dipolaire comprenant un groupement associatif dans une composition de caoutchouc diénique renforcée pour réduire l'hystérèse de la composition de caoutchouc.

Les Demanderesses poursuivant leurs efforts ont découvert qu'il était encore possible de diminuer l'hystérèse de ces compositions de caoutchouc diénique contenant un élastomère diénique et un composé 1,3-dipolaire comprenant un groupement associatif que le choix judicieux d'un élastomère diénique spécifique combiné à l'utilisation d'un composé 1,3-dipolaire comprenant un groupe associatif. Ce but est atteint en introduisant dans la composition de caoutchouc renforcée un acide spécifique et en utilisant comme élastomère diénique un élastomère diénique obtenu par polymérisation stéréospécifique en présence d'un système catalytique Ziegler-Natta à base de néodyme.

Ainsi, un objet de l'invention est une composition de caoutchouc à base au moins d'un élastomère diénique, d'un composé 1,3-dipolaire et d'une charge renforçante, l'élastomère diénique étant obtenu par polymérisation stéréospécifique en présence d'un système catalytique Ziegler-Natta à base de néodyme, le composé 1,3-dipolaire comprenant un groupe Q et un groupe A reliés entre eux par un groupe B dans lequel Q comprend un dipôle contenant au moins et de préférence un atome d'azote, A comprend un groupe associatif comprenant au moins un atome d'azote, B est un atome ou un groupe d'atomes formant une liaison entre Q et A, caractérisée en ce que la composition comprend en outre un acide qui est un acide de Lewis choisi dans le groupe constitué par les oxydes d'aluminium, de titane et les composés M(L)ₙ , ou un acide de Bronsted choisi dans le groupe constitué par les acides sulfoniques, M étant le bore, le magnésium, l'aluminium, le titane, le fer, le zinc, l'indium, l'ytterbium, L étant un ligand monodentate ou bidendate, n étant un nombre entier allant de 2 à 4.

L'invention concerne aussi un pneumatique comprenant la composition de caoutchouc conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

L'élastomère diénique utile au besoin de l'invention a pour caractéristique essentiel d'être obtenu par polymérisation stéréospécifique d'un 1,3-diène en présence d'un système catalytique Ziegler-Natta à base de néodyme. L'élément néodyme peut se trouver dans l'élastomère diénique sous la forme métallique ou sous la forme de dérivés de néodyme, de préférence en une teneur supérieure à 150 ppm, de manière plus préférentielle en une teneur comprise entre 150 et 450 ppm. L'homme du métier comprend que l'élastomère diénique est synthétisé en présence d'un système catalytique qui utilise un précurseur métallique à base de néodyme. La présence de l'élément néodyme dans l'élastomère diénique résulte du système catalytique à base de néodyme utilisé dans la synthèse de l'élastomère diénique.

Pour mémoire, les polymérisations stéréospécifiques sont conduites en présence d'un système catalytique multi-composants de type Ziegler-Natta. Le système catalytique fait intervenir au moins trois constituants organométalliques essentiels, que sont :
- un précurseur métallique à base d'un métal appartenant à l'un des groupes III à VIII;
- un agent d'alkylation du métal du précurseur métallique, lequel agent d'alkylation est à base d'un métal du groupe II ou III tel que Mg ou Al ;
- un agent halogénant, tel qu'un halogénure d'alkyle aluminium.
L'agent d'alkylation est aussi appelé co-catalyseur.
Certains systèmes catalytiques ne font appel qu'à deux constituants, c'est-à-dire un précurseur métallique à base d'un métal de transition et un co-catalyseur, de type agent d'alkylation.
L'homme de l'art connaît les conditions de mise en œuvre de ces trois constituants pour l'obtention de systèmes catalytiques efficaces pour la polymérisation stéréospécifique de diène(s) conjugué(s), tels que décrits par exemple dans la revue « Neodymium Based Ziegler-Natta Catalysts and their Application in Diene Polymerization », Adv Polym Sci (2006) 204 pp 1-154.
A titre de précurseur métallique, on peut citer les composés à base de fer, cobalt, nickel, chrome, titane, vanadium ou une terre rare tels que le néodyme.
A titre d'agent d'alkylation, on peut citer les organolithiens, les alkyls aluminium ou les hydrures d'alkyle aluminium ou les méthylaluminoxanes.
A titre d'agent halogénant, on peut citer les halogénures d'alkyle aluminium.

Selon les propriétés de l'élastomère diénique à synthétiser qui sont recherchées telles que sa microstructure et sa macrostructure et selon les caractéristiques du procédé qui sont préférées du point de vue de la productivité, l'homme de l'art choisit les constituants du système catalytique ainsi que leurs proportions relatives pour obtenir un système catalytique qui permet dans les meilleures conditions la synthèse de l'élastomère diénique.

Dans la présente demande, l'expression « un système catalytique à base de néodyme » est équivalente à dire que le système catalytique contient un précurseur métallique à base de néodyme.

La polymérisation en présence d'un système catalytique à base de néodyme est bien connue, et est documentée dans le Handbook of Polymer Synthesis, Second Edition, H. Kicheldorf, Oskar Nuyken, Graham Swift - 2004 - Technology & Engineering.

Parmi les systèmes catalytiques Ziegler-Natta à base de néodyme connus pour catalyser la polymérisation de diène, le néodyme est utilisé par exemple sous la forme de carboxylates ou de phosphates de néodyme, pour les sels les plus couramment utilisés.

Le système catalytique Ziegler-Natta à base de néodyme comprend par exemple comme co-catalyseur un composé organoaluminique qui est préférentiellement choisi parmi AlR₃ et AlR₂H, où R est choisi parmi les radicaux alkyles, cycloalkyles, aryles, alkaryles, aralkyles, cycloalkylalkyles et cycloalkylaryle. Les composés trialkylaluminium ou les dialkylaluminium sont particulièrement préférés, tout particulièrement lorsque le radical alkyle est en C2 à C4.

Le système catalytique, en plus du dérivé au néodyme et le co-catalyseur, peut comprendre un agent halogénant. A titre d'agent halogénant, on peut citer les halogénures d'organoaluminium, de manière préférentielle un XAlR'₂, où R' est choisi parmi les radicaux alkyles, cycloalkyles, aryles, alkaryles, aralkyles, cycloalkylalkyles et cycloalkylaryle, X est un atome d'halogène, de préférence un atome de chlore.

La polymérisation peut être conduite selon un procédé continu ou discontinu, en masse, en solution ou en dispersion. Dans une polymérisation en présence de solvant, le solvant est généralement choisi parmi les solvants hydrocarbonés aromatiques, aliphatiques et leurs mélanges. A titre de solvant couramment utilisé, on peut citer le toluène, le pentane, l'hexane, l'heptane, le cyclohexane et le méthylcyclohexane.

Le monomère polymérisé pour conduire à l'élastomère diénique utile aux besoins de l'invention est un diène, de préférence un 1,3-diène ayant de 4 à 8 atomes de carbone, de manière plus préférentielle le butadiène, l'isoprène ou leur mélange.

Les quantités relatives de monomère, de dérivés au néodyme, de co-catalyseur et le cas échéant d'agent halogénant et de solvant pour la fabrication de l'élastomère diénique sont déterminées par l'homme du métier en fonction des caractéristiques recherchées de l'élastomère diénique utile aux besoins de l'invention telles que la microstructure et la macrostructure, et en fonction de paramètres de procédé recherchés tels que la cinétique, le rendement.

L'élastomère diénique utile aux besoins de l'invention peut être synthétisé selon l'une quelconque des variantes précédemment citées de polymérisation catalysée par un système catalytique Ziegler-Natta à base de néodyme. L'élastomère diénique utile aux besoins de l'invention peut être un mélange d'élastomères diéniques qui se différencient les uns des autres par leur microstructure ou leur macrostructure.

Selon un mode de réalisation de l'invention, l'élastomère diénique utile aux besoins de l'invention contient plus de 90% en mole de liaison 1,4-cis.

Selon un mode de réalisation particulier de l'invention, l'élastomère diénique utile aux besoins de l'invention est un polybutadiène, un polyisoprène, un copolymère de 1,3-butadiène et d'isoprène ou leur mélange. On entend par leur mélange le mélange de deux de ces élastomères diéniques ou de ces trois élastomères.

Le composé 1,3-dipolaire utile aux besoins de l'invention comprend un (un ou plusieurs) groupe Q et un (un ou plusieurs) groupe A reliés entre eux par un groupe B dans lequel :
- Q comprend un dipôle contenant au moins et de préférence un atome d'azote,
- A comprend un groupe associatif comprenant au moins un atome d'azote,
- B est un atome ou un groupe d'atomes formant une liaison entre Q et A.

Selon l'un quelconque des modes de réalisation de l'invention, le composé 1,3-dipolaire contient de préférence un seul groupe Q relié au(x) groupe(s) A par le groupe B.

Selon l'un quelconque des modes de réalisation de l'invention, le composé 1,3-dipolaire contient de manière plus préférence un seul groupe Q et un seul groupe A reliés entre eux par le groupe B.

On entend par dipôle une fonction capable de former une cycloaddition dipolaire [1,3] sur une liaison carbone-carbone insaturée.

Par « groupe associatif », on entend des groupes susceptibles de s'associer les uns aux autres par des liaisons hydrogène, chaque groupe associatif comportant au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Le groupe A selon l'invention répond à l'une des formules (I) à (V) suivantes : 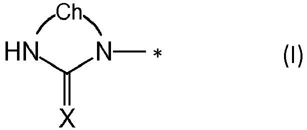 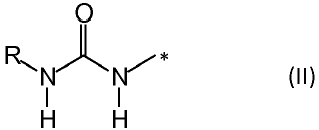 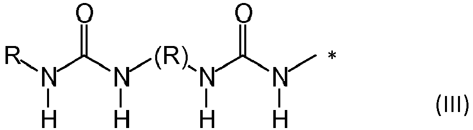 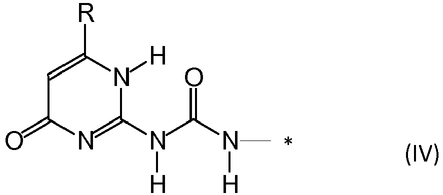 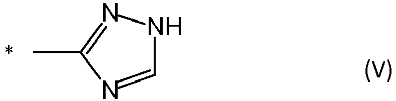 où :
- Ch désigne une chaîne carbonée pouvant éventuellement contenir des hétéroatomes,
- * représente un rattachement direct à B,
- R désigne un groupe hydrocarboné pouvant éventuellement contenir des hétéroatomes,
- X désigne un atome d'oxygène ou de soufre, ou un groupe NH, de préférence un atome d'oxygène.

Généralement, le cycle dans la formule (I) est un cycle à 5 ou 6 atomes.

Selon un mode de réalisation préférentiel de l'invention, le groupe A répond à la formule (VI) où * représente un rattachement direct à B.

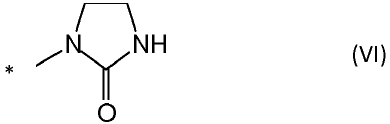

Le groupe B qui est un atome ou un groupe d'atomes formant une liaison entre Q et A est de préférence un groupe contenant jusqu'à 20 atomes de carbone et pouvant contenir au moins un hétéroatome. B peut être une chaîne aliphatique contenant préférentiellement 1 à 20 atomes de carbone, plus préférentiellement 1 à 12 atomes de carbone, encore plus préférentiellement 1 à 6 atomes de carbone, ou un groupe contenant un motif aromatique et contenant préférentiellement 6 à 20 atomes de carbone, plus préférentiellement 6 à 12 atomes de carbone.

Selon un mode de réalisation préférentiel de l'invention, le composé 1,3-dipolaire est choisi dans le groupe constitué par les oxydes de nitrile, les nitrones et les nitriles imines, auquel cas Q contient un motif -C≡N→O, -C=N(→O)- ou -C≡N→N.

Selon le mode de réalisation particulier de l'invention où Q comprend un motif -C≡N→O, Q désigne préférentiellement le motif répondant à la formule (VII) dans laquelle quatre des cinq symboles R₄ à R₈ , identiques ou différents, sont chacun un atome, en particulier H, ou un groupe d'atomes et le cinquième symbole désigne un rattachement direct à B, sachant que R₄ et R₈ sont de préférence tous les deux différents de H. Le groupe d'atomes est de préférence un groupe aliphatique ou un groupe contenant un (un ou plusieurs) motif aromatique. Le groupe aliphatique peut contenir 1 à 20 atomes de carbone, préférentiellement 1 à 12 atomes de carbone, plus préférentiellement 1 à 6 atomes de carbone, encore plus préférentiellement 1 à 3 atomes de carbone. Le groupe contenant un (un ou plusieurs) motif aromatique peut contenir 6 à 20 atomes de carbone, préférentiellement 6 à 12 atomes de carbone.

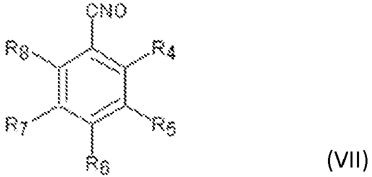

R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon une variante de ce mode de réalisation particulier de l'invention, R₄, R₆ et R₈ sont identiques. Selon cette variante où ils sont identiques, R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon une autre variante de ce mode de réalisation particulier de l'invention selon lequel Q désigne le motif de formule (VII), B représente un motif choisi parmi -(CH₂)_{y₁}-, -[NH-(CH₂)_{y₂}]_{x₁}- et -[O-(CH2)_{y₃}]_{x₂}-, y₁, y₂ et y₃ représentant, indépendamment, un nombre entier allant de 1 à 6, et x₁ et x₂ représentant, indépendamment, un nombre entier allant de 1 à 4. Cette variante peut être combinée à la variante selon laquelle R₄, R₆ et R₈ sont identiques, préférentiellement chacun un groupe alkyle de 1 à 6 atomes de carbone, plus préférentiellement de 1 à 3 atomes de carbone, encore plus préférentiellement un groupe méthyle ou éthyle.

Le composé 1,3-dipolaire est avantageusement l'un des composés de formule (VIII) à (XIII) :

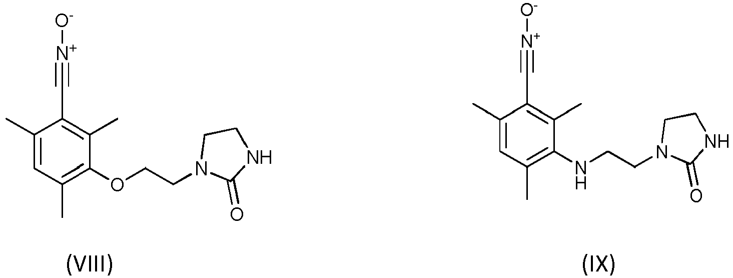

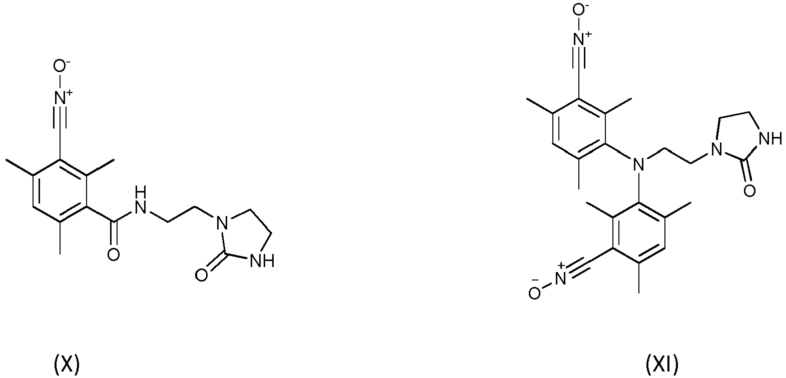

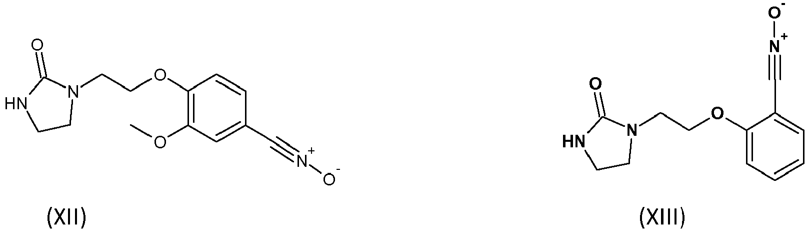

De manière davantage préférentielle, le composé 1,3-dipolaire est le composé de formule (VIII), le 2,4,6-triméthyl-3-(2-(2-oxoimidazolidin-1-yl)éthoxy) benzonitriloxide.

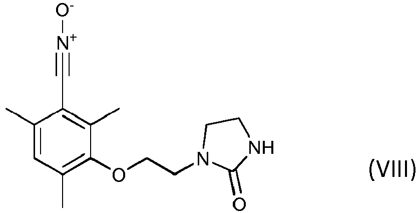

Selon le mode de réalisation particulier de l'invention où Q comprend un motif -C=N(→O)-, Q comporte préférentiellement le motif répondant à la formule (XIV) ou (XV) 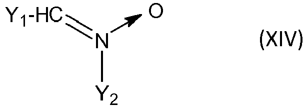 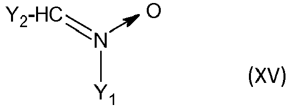 où :
Y₁ est un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle,
et Y₂ est un groupe aliphatique, préférentiellement un groupe hydrocarboné saturé contenant de préférence 1 à 12 atomes de carbone, ou un groupe comportant un motif aromatique et contenant préférentiellement 6 à 20 atomes de carbone, Y₂ comportant un rattachement direct à B.

Selon ce mode de réalisation particulier de l'invention, le composé 1,3-dipolaire est l'un des composés 1,3-dipolaires de formule (XVI) à (XX) : 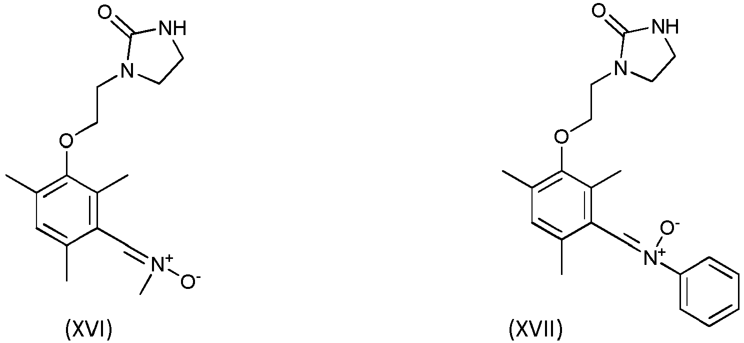 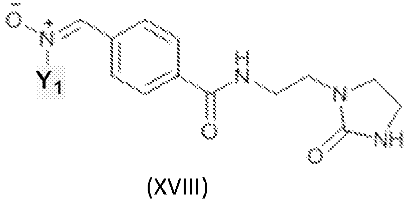 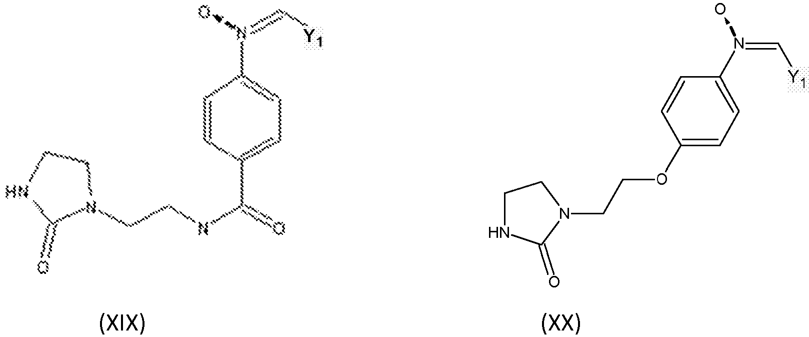 avec Y₁ étant tel que défini précédemment, à savoir un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle.

Le taux de composé 1,3-dipolaire utilisé est exprimé en équivalent molaire de groupe A. Par exemple, si le composé 1,3-dipolaire contient un seul groupe A comme par exemple dans le composé de formule (VIII), à une mole de composé 1,3-dipolaire correspond une mole de groupe A. Si le composé 1,3-dipolaire contient deux cycles groupe A, à une mole de composé 1,3-dipolaire correspond deux moles de groupe A. Dans ce dernier cas l'utilisation du composé 1,3-dipolaire selon un équivalent molaire de groupe A correspond à une demi-mole de composé 1,3-dipolaire.

Selon l'un quelconque des modes de réalisation de l'invention, la quantité de composé 1,3-dipolaire utilisée est préférentiellement de 0.01 à 50, plus préférentiellement de 0.01 à 10, encore plus préférentiellement de 0.03 à 5, mieux de 0.03 à 3 équivalents molaires de groupe A pour 100 moles d'unités monomères constituant l'élastomère diénique utile aux besoins de l'invention. Les plages préférentielles peuvent s'appliquer à l'un quelconque des modes de réalisation de l'invention.

Selon une première variante de l'invention, variante préférentielle de l'invention, l'acide de Lewis utile aux besoins de l'invention est choisi dans le groupe constitué par les oxydes d'aluminium, de titane et les composés M(L)ₙ, M étant le bore, le magnésium, l'aluminium, le titane, le fer, le zinc, l'indium, l'ytterbium, L étant un ligand monodentate ou bidendate, et n étant un nombre entier allant de 2 à 4. La valeur de n dépend du degré d'oxydation de M dans le composé considéré.

On rappelle qu'un acide de Lewis, conformément à la définition donnée par IUPAC dans le document *PAC,* 1994, 66, 1077, Glossary of terms used in physical organic chemistry (IUPAC Recommendations 1994*)* est une entité qui possède au moins un site accepteur d'une paire électronique. Il peut s'agir d'un composé isolé ou de la surface d'un cristal, en particulier les oxydes métalliques comme par exemple TiO₂.

Le ligand monodentate peut être un halogénure, un groupe alcoolate R¹O avec R¹ alkyle ayant de préférence 1 à 6 atomes de carbone, un groupe carboxylate R¹COO avec R¹ alkyle ayant de préférence 1 à 7 atomes ou un groupe triflate. Il est rappelé que le groupe triflate a pour formule CF₃SO₂O et peut être noté en abrégé TfO.

Selon l'un quelconque des modes de réalisations de cette variante, le ligand bidentate est de préférence l'énolate d'une 1,3-dicétone, de manière plus préférentielle l'acétylacétonate.

Selon un mode de réalisation préférentiel de la première variante, l'acide de Lewis est choisi dans le groupe constitué par InCl₃, MgBr₂, SnCl₂, Ti(OR²)₄, TiO₂, Al(OR²)₃, FeCl₃, Yb(OTf) et ZnCl₂, R² désignant un atome d'hydrogène, un groupe alkyle hydrocarboné de 1 à 6 atomes de carbone, un groupe acyle R³CO avec R³ alkyle de 1 à 7 atomes de carbone ou un groupe triflyle CF₃SO₂.

Selon un mode de réalisation plus préférentiel de la première variante, l'acide de Lewis est Ti(OR²)₄, TiO₂ ou Al(OR²)₃, R² étant tel que défini précédemment.

Selon une deuxième variante de l'invention, l'acide utile aux besoins de l'invention est un acide de Bronsted choisi dans le groupe constitué par les acides sulfoniques. A titre d'acide sulfonique, on peut citer l'acide paratoluène sulfonique ou l'acide méthane sulfonique.

L'acide utile aux besoins de l'invention, qu'il soit un acide de Lewis ou de Bronsted, est utilisé dans la composition de caoutchouc à un taux compris de préférentiellement entre 0.05 et 5 pce, plus préférentiellement entre 0.05 et 3 pce, encore plus préférentiellement entre 0.05 et 1 pce. Ces plages préférentielles s'appliquent à l'un quelconque des modes de réalisation de l'invention.

La charge renforçante est tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Evonik-Degussa, les silices « Zeosil » 1165MP, 1135MP, 1115MP et Premium 200MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon l'un quelconque des modes de réalisation de l'invention, la charge renforçante comprend une charge inorganique renforçante, de préférence une silice.

Selon un mode de réalisation particulier de l'invention, la charge inorganique, préférentiellement une silice, représente plus de 50% en masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Le taux de charge renforçante totale est compris préférentiellement entre 20 et 200 pce. En deçà de 20 pce, le renforcement de la composition de caoutchouc peut être insuffisant pour apporter un niveau de cohésion ou de résistance à l'usure adéquats du composant caoutchouteux du pneumatique comprenant cette composition. Au-delà de 200 pce, il existe un risque d'augmentation de l'hystérèse et donc de la résistance au roulement des pneumatiques. Pour cette raison, le taux de charge renforçante totale est plus préférentiellement entre 30 et 150 pce, encore plus préférentiellement de 50 à 150 pce, notamment pour un usage dans une bande de roulement de pneumatique. L'une quelconque de ces plages de taux de charge renforçante totale peut s'appliquer à l'un quelconque des modes de réalisation de l'invention.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale suivante
Z - G - Sₓ - G - Z
dans laquelle :
- x est un entier de 2 à 8 (de préférence de 2 à 5) ;
- les symboles G, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 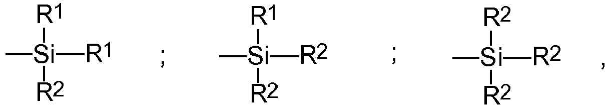
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupes fonctionnels azo-dicarbonyle, tels que décrits par exemple dans les demandes de brevets WO 2006/125532, WO 2006/125533, WO 2006/125534.

Selon l'un quelconque des modes de réalisation de l'invention, l'agent de couplage peut être l'un des silanes cités.

La teneur en agent de couplage est avantageusement inférieure à 30 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 16 pce, plus préférentiellement compris dans un domaine allant de 3 à 10 pce. Ce taux est aisément ajusté par l'homme du métier selon le taux de charge inorganique utilisé dans la composition.

La composition de caoutchouc peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

Selon l'un quelconque des modes de réalisation de l'invention, la composition de caoutchouc peut contenir en outre un agent de réticulation chimique. La réticulation chimique permet la formation de liaisons covalentes entre les chaînes d'élastomère. L'agent de réticulation chimique peut être un système de vulcanisation ou un ou plusieurs composés peroxydes.

Selon une première variante, le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. Ces plages préférentielles peuvent s'appliquer à l'un quelconque des modes de réalisation de la première variante de l'invention. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Selon une deuxième variante, lorsque la réticulation chimique est effectuée au moyen d'un ou plusieurs composés peroxydes, le ou lesdits composés peroxydes représentent de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269.

La composition de caoutchouc peut contenir en outre un second élastomère diénique autre que l'élastomère diénique utile aux besoins de l'invention. Par définition, le second élastomère diénique n'est pas synthétisé en présence d'un système catalytique Ziegler Natta à base de néodyme.

Le second élastomère diénique est un élastomère diénique conventionnel dans le domaine des pneumatiques tels que les élastomères choisis parmi les polybutadiènes (BR), les polyisoprènes de synthèse (IR), le caoutchouc naturel (NR), les copolymères de butadiène, les copolymères d'isoprène et les mélanges de ces élastomères.

De préférence, l'élastomère diénique utile aux besoins de l'invention est présent dans la composition de caoutchouc selon une quantité supérieure à 50 pce, de manière plus préférentielle supérieure à 75 pce, de manière encore plus préférentielle supérieure à 90 pce. Ces plages préférentielles peuvent s'appliquer à l'un quelconque des modes de réalisation de l'invention.

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception de l'agent de réticulation chimique, sont mélangés de manière intime par un malaxage thermomécanique, en une ou plusieurs étapes jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors l'agent de réticulation chimique à basse température, généralement dans un mélangeur externe tel qu'un mélangeur à cylindres; le tout est alors mélangé (phase productive) pendant quelques minutes, par exemple entre 2 et 15 min.

L'élastomère diénique utile aux besoins de l'invention et le composé 1,3-dipolaire sont introduits en tant que tels comme constituants de base dans les mélangeurs appropriés. Le composé 1,3-dipolaire est de manière préférentielle malaxé thermomécaniquement avec l'élastomère diénique utile aux besoins de l'invention avant d'introduire les autres constituants de base de la composition de caoutchouc.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

La composition de caoutchouc, pouvant être soit à l'état cru (avant réticulation ou vulcanisation), soit à l'état cuit (après réticulation ou vulcanisation), peut être un produit semi-fini qui peut être utilisé dans un pneumatique, notamment comme bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### II.1.1-Mesure du taux de dérivés de néodyme :

Tout élastomère diénique synthétisé en présence d'un système catalytique comprenant un précurseur métallique, peut contenir l'élément métallique sous la forme métal ou de dérivés de ce métal. Pour quantifier dans l'élastomère la teneur de l'élément métallique, qu'il soit sous la forme de métal ou de dérivés métalliques, est utilisée une méthode indirecte qui a recours à la minéralisation d'une prise d'échantillon de l'élastomère et à la spectrométrie d'émission atomique par couplage à plasma induit. Cette méthode permet de déterminer la nature et la teneur massique de l'élément métallique présent dans l'échantillon minéralisé. Cette teneur mesurée est aussi la teneur massique en l'élément métallique dans la prise d'échantillon d'élastomère non minéralisé. La teneur massique de l'élément métallique qu'il soit sous la forme de métal ou de dérivés métalliques dans l'élastomère est donc exprimée en partie par million (ppm) de l'élément néodyme. Ainsi, à une teneur de 100 ppm d'élément Nd mesurée dans l'échantillon élastomère minéralisé correspond 100 ppm d'élément Nd dans l'élastomère non minéralisé.

### La méthode est décrite en détail ci-après :

La spectrométrie d'émission atomique par couplage à plasma (ICP-AES) induit est une technique permettant de réaliser une analyse élémentaire à la fois qualitative et quantitative.
La détermination du taux de résidus catalytiques par ICP-AES se décompose en deux étapes : la minéralisation de l'échantillon (mettre en solution les éléments de l'échantillon) et l'analyse de la solution obtenue par ICP-AES.
La minéralisation de l'échantillon consiste en une digestion acide assistée par micro-ondes. Un prélèvement de plusieurs dizaines de mg d'échantillon est découpé en petits morceaux et placé dans un réacteur micro-ondes avec un mélange d'acides nitrique et chlorhydrique concentrés (l'acide nitrique doit être en excès et la composition du mélange peut varier de 60/40 à 90/10 % v:v). Le réacteur est fermé et placé dans un four micro-ondes où il subit un programme de minéralisation : les micro-ondes mettent en rotation les molécules polaires entraînant un échauffement par friction moléculaire et un dégagement de chaleur au cœur de la masse. Sous l'effet de la température et de la pression (rampe de température jusqu'à 220°C et pression maximale de 75bars, dépendante de la température), la matière s'oxyde et les éléments passent en solution. La solution est ensuite transvasée quantitativement dans une fiole jaugée de volume connu puis analysée par ICP-AES.
La technique d'ICP-AES (gaz : Argon ; puissance du plasma : 1100W ; longueurs d'onde d'émission λ_{Nd} = 401,225nm) utilise un plasma pour désolvater, vaporiser, atomiser (parfois ioniser) et exciter les éléments de la solution échantillon. Quand les atomes ou ions excités reviennent à leur état fondamental, ils émettent une longueur d'onde caractéristique de l'élément et dont l'intensité est proportionnelle à la concentration de l'élément dans la solution. En comparant les intensités des raies d'émission de l'élément Nd à une gamme de calibration externe, la concentration de de l'élément Nd dans l'échantillon peut être déterminée.

### 11.1.2-Microstructure des élastomères :

La microstructure est déterminée selon la méthode décrite dans l'article intitulé "Fast and robust method for the détermination of microstructure and composition in butadiene, styrene-butadiene, and isoprene rubber by near-infrared spectroscopy", Vilmin F., Dussap C., Coste N., Appl Spectrosc. 2006, 60(6):619-30.

### 11.1.3-Plasticité Mooney :

Pour mesurer la plasticité Mooney, on utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### II.1.4-Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à 60°C selon la norme ASTM D 1349-99. On effectue un balayage en amplitude de déformation de 0,1% à 100% (cycle aller), puis de 100% à 0,1% (cycle retour). Le résultat exploité est le facteur de perte tan(δ) à 60°C. Pour le cycle retour, on indique la valeur maximale de tan(δ) observée, notée tan(δ)max. Les résultats sont reportés en base 100 par rapport à une référence. Plus la valeur est faible, plus la valeur de tan(δ)max est faible, meilleur est le gain en hystérèse.

### II.2-Préparation des compositions de caoutchouc :

Les compositions de caoutchouc C1 à C7 sont préparées selon le mode opératoire suivant :
- on introduit dans un mélangeur interne Polylab de 85cm³, rempli à 70% et dont la température initiale de cuve est d'environ 50°C, l'élastomère diénique, le cas échéant l'agent de modification et l'acide de Lewis,
- on conduit un travail thermomécanique de 1 à 2 min à 110°C,
- puis on introduit la charge renforçante, l'agent de couplage, les divers autres ingrédients à l'exception du système de vulcanisation,
- on conduit alors un travail thermomécanique (phase non-productive) en une étape (durée totale du malaxage égale à environ 5 min), jusqu'à atteindre une température maximale de "tombée" de 160°C,
- on récupère le mélange ainsi obtenu, on le refroidit puis on ajoute le système de vulcanisation (soufre et accélérateur) sur un mélangeur externe (homo-finisseur) à 25°C, en mélangeant le tout (phase productive) pendant environ 5 à 6 min.

Le composé 1,3-dipolaire est le 2,4,6-triméthyl-3-(2-(2-oxoimidazolidin-1-yl)éthoxy)-benzonitriloxide dont la synthèse est décrite dans la demande de brevet WO 2012007442 ; il est utilisé à un taux de 2.13 g pour 100 g d'élastomère à modifier, soit 0.5% molaire, c'est-à-dire 0.5 mole pour 100 moles d'unité isoprène.

L'acide de Lewis est Al(OiPr)₃ ou TiO₂.

Les élastomères, utilisés et respectivement désignés dans le tableau 1 par le symbole IR-Ti et IR-Nd, sont :
- un polyisoprène commercial, le « NIPOL2200 » de Nippon Zeon, polyisoprène préparé par polymérisation Ziegler Natta en présence d'un système catalytique à base de Ti,
- un polyisoprène préparé par polymérisation Ziegler Natta en présence d'un système catalytique à base de néodyme tel que décrit dans la demande WO 2014086804. ML(1+4) 100°C = 68, unités *cis* 1,4 = 97.2%. Il contient plus de 150 ppm de l'élément Nd, notamment entre 200 et 450 ppm.

Les formulations (en pce) des compositions C1 à C7 sont décrites dans le tableau 1. On appelle ci-après un élastomère Ti et un élastomère Nd des élastomères diéniques préparés par polymérisation Ziegler Natta en présence d'un système catalytique respectivement à base de titane et à base de néodyme.
La composition C1 n'est pas conforme à l'invention, puisqu'elle comprend un élastomère Ti. La composition C2 est une composition conforme à l'invention, puisqu'elle comprend un élastomère Nd, le composé 1,3-dipolaire, ainsi que le dioxyde de titane.
Les compositions C3 à C4, dépourvues de dioxyde de titane, ne sont pas conformes à l'invention. Elles sont respectivement les témoins des compositions C1 et C2.
La composition C5 qui contient du dioxyde de titane, mais ne contient pas de composé 1,3-dipolaire n'est pas conforme à l'invention.
La composition C6 qui ne contient ni le composé 1,3-dipolaire, ni le dioxyde de titane, n'est pas conforme à l'invention. Elle est le témoin de la composition C5, puisqu'elle contient le même élastomère diénique que C5.
La comparaison des résultats des compositions C2, C4 et C5 permettent d'étudier les effets relatifs à la présence du dioxyde de titane et du composé 1,3-dipolaire en présence 'un élastomère Nd.
La composition C7 qui diffère de la composition C2 en ce que l'acide de Lewis est le Al(OiPr)₃ au lieu du dioxyde de titane, est conforme à l'invention.

### II.3-Propriétés à cuit des compositions de caoutchouc :

Les compositions après vulcanisation, sont calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement. Les résultats sont consignés dans le tableau 2.

Conformément à l'état de la technique, on observe une diminution de l'hystérèse quand la composition comprend le composé 1,3-dipolaire : en effet tan(δ)max à 60°C pour C2 est 25% plus faible que pour C6.

On observe que C1 présente une valeur de tan(δ)max à 60°C égale à celle de son témoin C3. Alors que la composition C1 diffère de C3 seulement par la présence de dioxyde de titane, ces résultats montrent que l'ajout de dioxyde de titane à une composition analogue à C3 est sans effet sur l'hystérèse.
En revanche, pour C2 on observe une diminution de l'hystérèse de 20% comparativement à son témoin C4. L'ajout de dioxyde de titane à une composition analogue à C4 permet un gain en hystérèse comparativement à C4. Comparativement à la composition C6, ce gain est d'autant plus significatif, puisqu'il est de 40%.
Par ailleurs, on note que la valeur de tan(δ)max à 60°C de C5 est proche de celle de C6. Le résultat de C5 montre qu'il n'y a pas de gain d'hystérèse quand on ajoute du dioxyde de titane sans ajouter ajouter le composé 1,3-dipolaire, même si l'élastomère diénique est un élastomère Nd.

C'est bien l'utilisation combinée du dioxyde de titane, du composé 1,3-dipolaire et de l'élastomère Nd qui permet encore un gain significatif en hystérèse.

Des résultats comparables quant à la synergie de l'acide, du composé 1,3-dipolaire et de l'élastomère Nd sont observés lorsque le dioxyde de titane est remplacé par Al(OiPr)₃.

Ces résultats qui traduisent la synergie de l'acide, du composé 1,3-dipolaire et de l'élastomère Nd sont tout à fait remarquables et inattendus.

**Tableau 1**

| Composition | C1 | C2 | C3 | C4 | C5 | C6 | C7 |
|---|---|---|---|---|---|---|---|
| IR-Ti | 100 | | 100 | | | | |
| IR-Nd | | 100 | | 100 | 100 | 100 | 100 |
| Composé 1,3-dipolaire | 2.13 | 2.13 | 2.13 | 2.13 | 0 | 0 | 2.13 |
| TiO₂ | 0.2 | 0.2 | | | 0.2 | | |
| Al(OiPr)₃ | | | | | | | 0.2 |
| Noir de carbone (1) | 3 | 3 | 3 | 3 | 3 | 3 | 3 |
| Silice (2) | 50 | 50 | 50 | 50 | 50 | 50 | 50 |
| Silane (3) | 5 | 5 | 5 | 5 | 5 | 5 | 5 |
| Cire anti ozone | 1 | 1 | 1 | 1 | 1 | 1 | 1 |
| Antioxydant | 2.5 | 2.5 | 2.5 | 2.5 | 2.5 | 2.5 | 2.5 |
| Acide stéarique | 2.5 | 2.5 | 2.5 | 2.5 | 2.5 | 2.5 | 2.5 |
| ZnO | 2.7 | 2.7 | 2.7 | 2.7 | 2.7 | 2.7 | 2.7 |
| Soufre | 1.5 | 1.5 | 1.5 | 1.5 | 1.5 | 1.5 | 1.5 |
| Accélérateur (4) | 1.8 | 1.8 | 1.8 | 1.8 | 1.8 | 1.8 | 1.8 |

| | | | | | | | |
|---|---|---|---|---|---|---|---|
| 1) N234 2) Silice "Zeosil 1165 MP" société Rhodia sous forme de microperles 3) TESPT ("Si69" société Degussa) 4) N-cyclohexyl-2-benzothiazyl-sulfénamide ("Santocure CBS" société Flexys). | | | | | | | |

**Tableau 2**

| Propriétés à cuit | C1 | C2 | C3 | C4 | C5 | C6 | C7 |
|---|---|---|---|---|---|---|---|
| Tanδₘₐₓ 60°C | 0.100 | 0.089 | 0.100 | 0.111 | 0.151 | 0.148 | 0.084 |

## Revendications

1. Composition de caoutchouc à base au moins d'un élastomère diénique, d'un composé 1,3-dipolaire et d'une charge renforçante,
l'élastomère diénique étant obtenu par polymérisation stéréospécifique en présence d'un système catalytique Ziegler-Natta à base de néodyme,
le composé 1,3-dipolaire comprenant un groupe Q et un groupe A reliés entre eux par un groupe B dans lequel Q comprend un dipôle contenant au moins et de préférence un atome d'azote, A comprend un groupe associatif comprenant au moins un atome d'azote, B est un atome ou un groupe d'atomes formant une liaison entre Q et A, **caractérisée en ce que** la composition comprend en outre un acide qui est un acide de Lewis choisi dans le groupe constitué par les oxydes d'aluminium, de titane et les composés M(L)ₙ , ou un acide de Bronsted choisi dans le groupe constitué par les acides sulfoniques,
M étant le bore, le magnésium, l'aluminium, le titane, le fer, le zinc, l'indium, l'ytterbium,
L étant un ligand monodentate ou bidendate,
n étant un nombre entier allant de 2 à 4,
le groupe A répondant à l'une des formules (I) à (V) suivantes, de préférence à la formule (VI) : 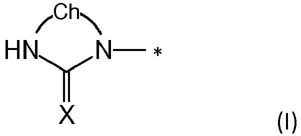 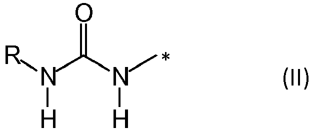 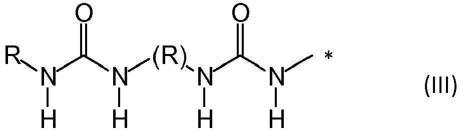 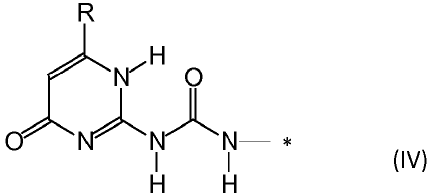 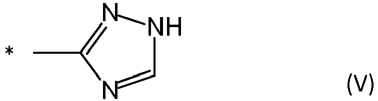 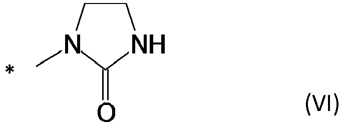 où :
- Ch désigne une chaîne carbonée pouvant éventuellement contenir des hétéroatomes,
- * représente un rattachement direct à B,
- R désigne un groupe hydrocarboné pouvant éventuellement contenir des hétéroatomes,
- X désigne un atome d'oxygène ou de soufre, ou un groupe NH, de préférence un atome d'oxygène.

2. Composition selon la revendication 1 dans laquelle la teneur en élément néodyme dans l'élastomère diénique est supérieure à 150 ppm, de préférence comprise entre 150 et 450 ppm.

3. Composition selon l'une quelconque des revendications 1 à 2 dans laquelle l'élastomère diénique contient plus de 90% en mole de liaisons 1,4-cis.

4. Composition selon l'une quelconque des revendications 1 à 3 dans laquelle l'élastomère diénique est un polybutadiène, un polyisoprène, un copolymère de 1,3-butadiène et d'isoprène ou leur mélange.

5. Composition selon l'une quelconque des revendications 1 à 4 dans laquelle le composé 1,3-dipolaire est choisi dans le groupe constitué par les oxydes de nitrile, les nitrones et les nitriles imines.

6. Composition selon l'une quelconque des revendications 1 à 5 dans laquelle Q contient un motif -C≡N→O, de préférence désigne le motif répondant à la formule (VII) 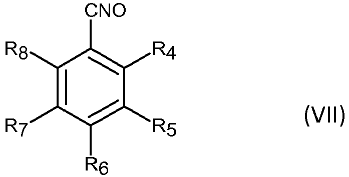 dans laquelle :
quatre des cinq symboles R₄ à R₈, identiques ou différents, sont chacun un atome ou un groupe d'atomes qui est préférentiellement un groupe aliphatique ou un groupe contenant un motif aromatique et le cinquième symbole désigne un rattachement direct à B, sachant que R₄ et R₈ sont de préférence tous les deux différents de H.

7. Composition selon la revendication 6 dans laquelle R₄, R₆ et R₈ sont chacun un groupe alkyle de 1 à 6 atomes de carbone, préférentiellement de 1 à 3 atomes de carbone, plus préférentiellement méthyle ou éthyle.

8. Composition selon l'une quelconque des revendications 6 à 7 dans laquelle Q désigne le motif de formule (VII) défini à l'une quelconque des revendications 6 à 7, B représente un motif choisi parmi -(CH₂)_{y₁}-, -[NH-(CH₂)_{y₂}]_{x₁}- et -[O-(CH2)_{y₃}]_{x₂}-, y₁, y₂ et y₃ représentant, indépendamment, un nombre entier allant de 1 à 6, et x₁ et x₂ représentant, indépendamment, un nombre entier allant de 1 à 4.

9. Composition selon l'une quelconque des revendications 1 à 8 dans laquelle le composé 1,3-dipolaire est l'un des composés de formule (VIII) à (XIII) :

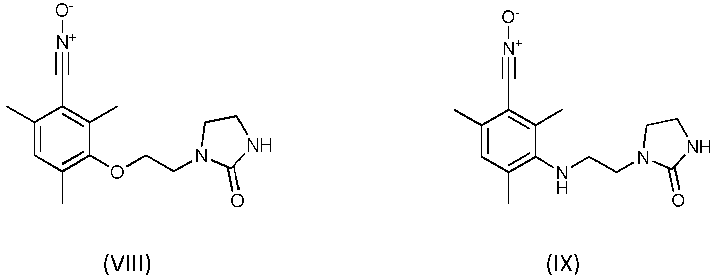

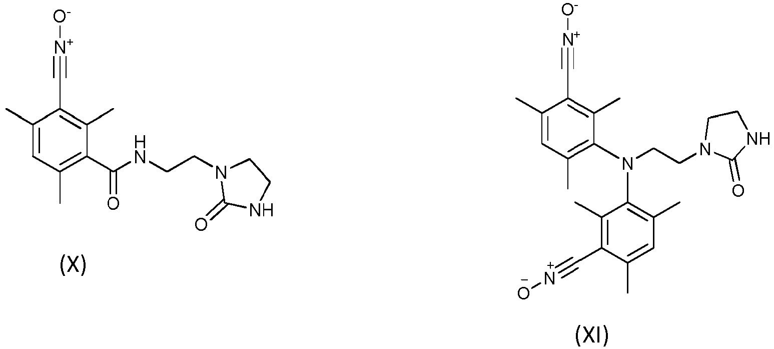

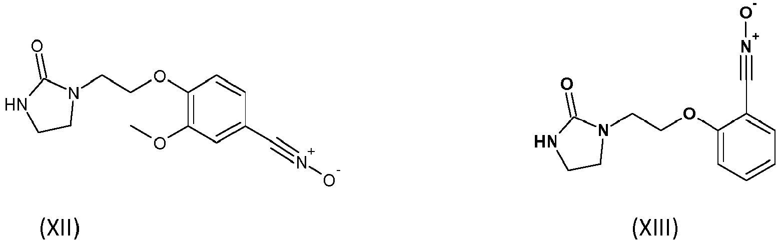

10. Composition selon l'une quelconque des revendications 1 à 5 dans laquelle Q contient un motif -C=N(→O)-, de préférence comporte le motif répondant à la formule (XIV) ou (XV) 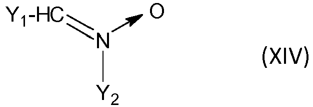 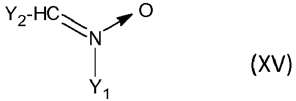 où
Y₁ est un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle,
et Y₂ est un groupe aliphatique, préférentiellement un groupe hydrocarboné saturé contenant de préférence 1 à 12 atomes de carbone, ou un groupe comportant un motif aromatique et contenant préférentiellement de 6 à 20 atomes de carbone, Y₂ comportant un rattachement direct à B.

11. Composition selon l'une quelconque des revendications 1 à 10 dans laquelle la charge renforçante comprend une charge inorganique renforçante, de préférence une silice, laquelle charge inorganique renforçante représente de préférence plus de 50% en masse de la charge renforçante.

12. Composition selon l'une quelconque des revendications 1 à 11 dans laquelle l'acide est un acide Lewis, de préférence est choisi dans le groupe constitué par InCl₃, MgBr₂, SnCl₂, Ti(OR²)₄, TiO₂, Al(OR²)₃, FeCl₃, Yb(OTf) et ZnCl₂, R² désignant un atome d'hydrogène, un groupe alkyle de 1 à 6 atomes de carbone, un groupe acyle R³CO avec R³ alkyle de 1 à 7 atomes de carbone ou un groupe triflyle CF₃SO₂, Tf représentant le groupe triflate, de manière plus préférentielle est Ti(OR²)₄, TiO₂ ou Al(OR²)₃.

13. Composition selon l'une quelconque des revendications 1 à 12 dans laquelle le ligand monodentate est un halogénure, un groupe alcoolate R¹O avec R¹ alkyle ayant de préférence 1 à 6 atomes de carbone, un groupe carboxylate R¹COO avec R¹ alkyle ayant de préférence 1 à 7 atomes ou un groupe triflate.

14. Composition selon l'une quelconque des revendications 1 à 12 dans laquelle le ligand bidentate est l'énolate d'une 1,3-dicétone.

15. .Pneumatique qui comprend une composition de caoutchouc définie à l'une quelconque des revendications 1 à 14.

## Patentansprüche

1. Kautschukzusammensetzung auf Basis von mindestens einem Dienelastomer, einer 1,3-dipolaren Verbindung und einem verstärkenden Füllstoff,
wobei das Dienelastomer durch stereospezifische Polymerisation in Gegenwart eines Ziegler-Natta-Katalysatorsystems auf Basis von Neodym erhalten wird,
wobei die 1,3-dipolare Verbindung eine Gruppe Q, und eine Gruppe A, die über eine Gruppe B ineinander verbunden sind, umfasst, wobei Q einen Dipol, der mindestens ein Stickstoffatom enthält, umfasst, A eine assoziative Gruppe mit mindestens einem Stickstoffatom umfasst, B für ein Atom oder eine Gruppe von Atomen, das bzw. die eine Bindung zwischen Q und A bildet, steht,
**dadurch gekennzeichnet, dass** die Zusammensetzung außerdem eine Säure umfasst, bei der es sich um eine Lewis-Säure aus der Gruppe bestehend aus Aluminiumoxiden, Titanoxiden und den Verbindungen M(L)ₙ oder eine Brönsted-Säure aus der Gruppe bestehend aus Sulfonsäuren handelt,
wobei M für Bor, Magnesium, Aluminium, Titan, Eisen, Zink, Indium oder Ytterbium steht,
wobei L für einen einzähnigen oder zweizähnigen Liganden steht,
wobei n für eine ganze Zahl im Bereich von 2 bis 4 steht,
wobei die Gruppe A einer der folgenden Formeln (I) bis (V), vorzugsweise der Formel (VI), entspricht: 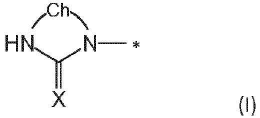 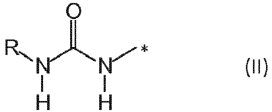 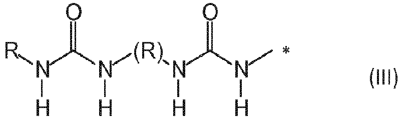 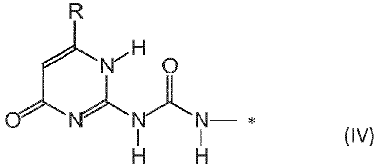 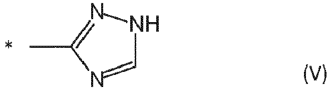 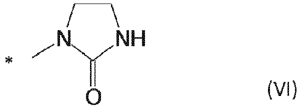 wobei:
- Ch für eine Kohlenstoffkette, die gegebenenfalls Heteroatome enthalten kann, steht,
- * für eine direkte Verknüpfung mit B steht,
- R für eine Kohlenwasserstoffgruppe, die gegebenenfalls Heteroatome enthalten kann, steht,
- X für ein Sauerstoff- oder Schwefelatom oder eine NH-Gruppe, vorzugsweise ein Sauerstoffatom, steht.

2. Zusammensetzung nach Anspruch 1, wobei der Gehalt des Elements Neodym in dem Dienelastomer größer als 150 ppm ist und vorzugsweise zwischen 150 und 450 ppm liegt.

3. Zusammensetzung nach einem der Ansprüche 1 bis 2, wobei das Dienelastomer mehr als 90 Mol-% cis-1,4-Bindungen enthält.

4. Zusammensetzung nach einem der Ansprüche 1 bis 3, wobei es sich bei dem Dienelastomer um ein Polybutadien, ein Polyisopren, ein Copolymer von 1,3-Butadien und Isopren oder eine Mischung davon handelt.

5. Zusammensetzung nach einem der Ansprüche 1 bis 4, wobei die 1,3-dipolare Verbindung aus der Gruppe bestehend aus Nitriloxiden, Nitronen und Nitriliminen ausgewählt ist.

6. Zusammensetzung nach einem der Ansprüche 1 bis 5, wobei Q eine -C≡N→O-Einheit enthält und vorzugsweise für die Einheit der Formel (VII) steht: 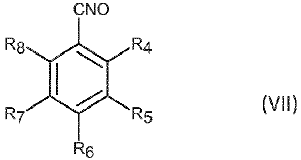 wobei vier der fünf Symbole R₄ bis R₈ gleich oder verschieden sind und jeweils für ein Atom oder eine Gruppe von Atomen, bei der es sich vorzugsweise um eine aliphatische Gruppe oder eine Gruppe mit einer aromatischen Einheit handelt, stehen und das fünfte Symbol für eine direkte Verknüpfung mit B steht, mit der Maßgabe, dass R₄ und R₈ vorzugsweise beide von H verschieden sind.

7. Zusammensetzung nach Anspruch 6, wobei R₄, R₆ und R₈ jeweils für eine Alkylgruppe mit 1 bis 6 Kohlenstoffatomen, vorzugsweise mit 1 bis 3 Kohlenstoffatomen, weiter bevorzugt Methyl oder Ethyl, stehen.

8. Zusammensetzung nach einem der Ansprüche 6 bis 7, wobei Q für die gemäß einem der Ansprüche 6 bis 7 definierte Einheit der Formel (VII) steht und B für eine Einheit steht, die aus -(CH₂)_{y1}-, -[NH-(CH₂)_{y2}]ₓ₁- und -[O-(CH₂)_{y3}]ₓ₂- ausgewählt ist, wobei y₁, y₂ und y₃ unabhängig für eine ganze Zahl im Bereich von 1 bis 6 stehen und x₁ und x₂ unabhängig für eine ganze Zahl im Bereich von 1 bis 4 stehen.

9. Zusammensetzung nach einem der Ansprüche 1 bis 8, wobei es sich bei der 1,3-dipolaren Verbindung um eine der Verbindungen der Formel (VIII) bis (XIII) handelt:

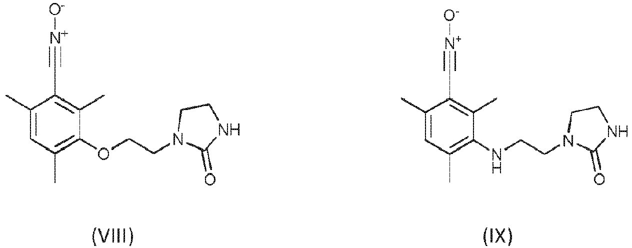

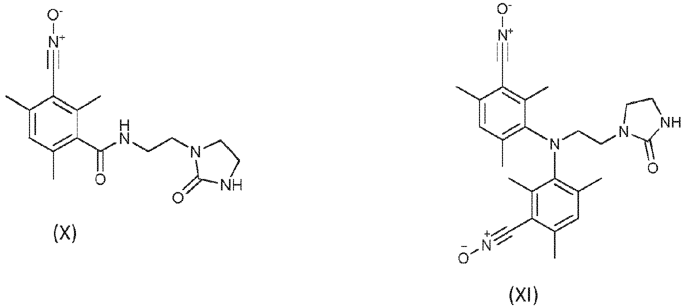

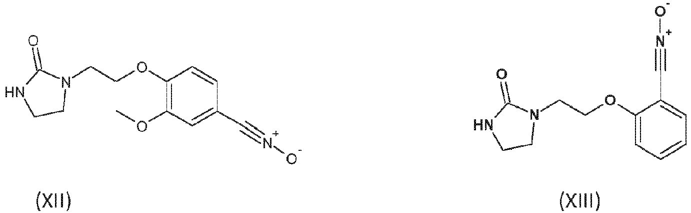

10. Zusammensetzung nach einem der Ansprüche 1 bis 5, wobei Q eine -C≡N→O-Einheit enthält und vorzugsweise die Einheit der Formel (XIV) oder (XV) umfasst: 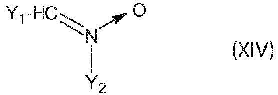 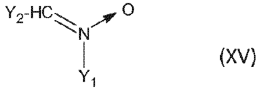 wobei
Y₁ für eine aliphatische Gruppe, vorzugsweise eine Alkylgruppe mit 1 bis 12 Kohlenstoffatomen, oder eine Gruppe mit 6 bis 20 Kohlenstoffatomen und einer aromatischen Einheit, vorzugsweise eine Aryl- oder Alkylarylgruppe, weiter bevorzugt eine Phenyl- oder Tolylgruppe, steht
und Y₂ für eine aliphatische Gruppe, vorzugsweise eine gesättigte Kohlenwasserstoffgruppe mit vorzugsweise 1 bis 12 Kohlenstoffatomen, oder eine Gruppe mit einer aromatischen Einheit und vorzugsweise 6 bis 20 Kohlenstoffatomen steht, wobei Y₂ eine direkte Verknüpfung mit B umfasst.

11. Zusammensetzung nach einem der Ansprüche 1 bis 10, wobei der verstärkende Füllstoff einen verstärkenden anorganischen Füllstoff, vorzugsweise eine Kieselsäure, umfasst, wobei der verstärkende anorganische Füllstoff vorzugsweise mehr als 50 Massen-% des verstärkenden Füllstoffs ausmacht.

12. Zusammensetzung nach einem der Ansprüche 1 bis 11, wobei die Säure eine Lewis-Säure ist und vorzugsweise aus der Gruppe bestehend aus InCl₃, MgBr₂, SnCl₂, Ti(OR²)₄, TiO₂, Al(OR²)₃, FeCl₃, Yb(OTf) und ZnCl₂ ausgewählt ist, wobei R² für Wasserstoffatom, eine Alkylgruppe mit 1 bis 6 Kohlenstoffatomen, eine Acylgruppe R³CO, wobei R³ für ein Alkyl mit 1 bis 7 Kohlenstoffatomen steht, oder eine Triflylgruppe CF₃SO₂ steht und Tf für die Triflatgruppe steht, und weiter bevorzugt Ti(OR²)₄, TiO₂ oder Al(OR²)₃ ist.

13. Zusammensetzung nach einem der Ansprüche 1 bis 12, wobei es sich bei dem einzähnigen Liganden um ein Halogenid, eine Alkoholatgruppe R¹O, wobei R¹ für Alkyl mit vorzugsweise 1 bis 6 Kohlenstoffatomen steht, eine Carboxylatgruppe R¹COO, wobei R¹ für Alkyl mit vorzugsweise 1 bis 7 Kohlenstoffatomen steht, oder eine Triflatgruppe handelt.

14. Zusammensetzung nach einem der Ansprüche 1 bis 12, wobei es sich bei dem zweizähnigen Liganden um das Enolat eines 1,3-Diketons handelt.

15. Reifen, der eine Kautschukzusammensetzung gemäß einem der Ansprüche 1 bis 14 umfasst.

## Claims

1. Rubber composition based at least on a diene elastomer, on a 1,3-dipolar compound and on a reinforcing filler,
the diene elastomer being obtained by stereospecific polymerization in the presence of a neodymium-based Ziegler-Natta catalytic system,
the 1,3-dipolar compound comprising a group Q and a group A connected together by a group B, in which Q comprises a dipole containing at least and preferably one nitrogen atom, A comprises an associative group comprising at least one nitrogen atom and B is an atom or a group of atoms forming a bond between Q and A, **characterized in that** the composition additionally comprises an acid which is a Lewis acid selected from the group consisting of aluminium oxides, titanium oxides and the compounds M(L)ₙ or a Bronsted acid selected from the group consisting of sulfonic acids,
M being boron, magnesium, aluminium, titanium, iron, zinc, indium or ytterbium,
L being a monodentate or bidentate ligand,
n being an integer ranging from 2 to 4;
the group A corresponding to one of the following formulae (I) to (V), preferably to the formula (VI): 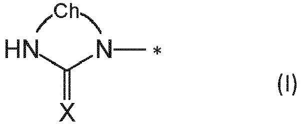 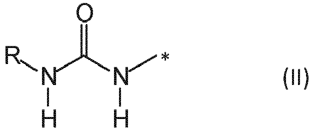 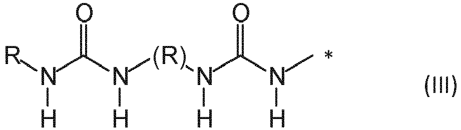 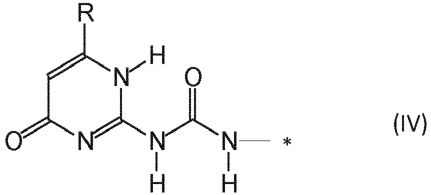 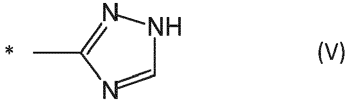 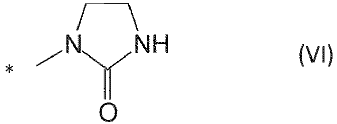 where:
- Ch denotes a carbon chain which can optionally contain heteroatoms,
- * represents a direct attachment to B,
- R denotes a hydrocarbon group which can optionally contain heteroatoms,
- X denotes an oxygen or sulfur atom or an NH group, preferably an oxygen atom.

2. Composition according to Claim 1, in which the content of element neodymium in the diene elastomer is greater than 150 ppm, preferably between 150 and 450 ppm.

3. Composition according to either one of Claims 1 and 2, in which the diene elastomer contains more than 90 mol% of cis-1,4- bonds.

4. Composition according to any one of Claims 1 to 3, in which the diene elastomer is a polybutadiene, a polyisoprene, a copolymer of 1,3-butadiene and of isoprene, or their mixture.

5. Composition according to any one of Claims 1 to 4, in which the 1,3-dipolar compound is selected from the group consisting of nitrile oxides, nitrones and nitrile imines.

6. Composition according to any one of Claims 1 to 5, in which Q contains a -C≡N→O unit, preferably denotes the unit corresponding to the formula (VII): 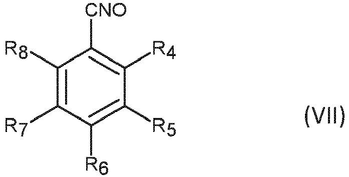 in which:
four of the five symbols R₄ to R₈, which are identical or different, are each an atom or a group of atoms which is preferably an aliphatic group or a group containing an aromatic unit, and the fifth symbol denotes a direct attachment to B, it being known that R₄ and R₈ are preferably both other than H.

7. Composition according to Claim 6, in which R₄, R₆ and R₈ are each an alkyl group of 1 to 6 carbon atoms, preferably of 1 to 3 carbon atoms and more preferably methyl or ethyl.

8. Composition according to any one of Claims 6 to 7, in which Q denotes the unit of formula (VII) defined in any one of Claims 6 to 7 and B represents a unit chosen from - (CH₂)_{y1}-, -[NH-(CH₂)_{y2}]ₓ₁- and -[O-(CH₂)_{y3}]ₓ₂-, y₁, y₂ and y₃ independently representing an integer ranging from 1 to 6, and x₁ and x₂ independently representing an integer ranging from 1 to 4.

9. Composition according to any one of Claims 1 to 8, in which the 1,3-dipolar compound is one of the compounds of formulae (VIII) to (XIII):

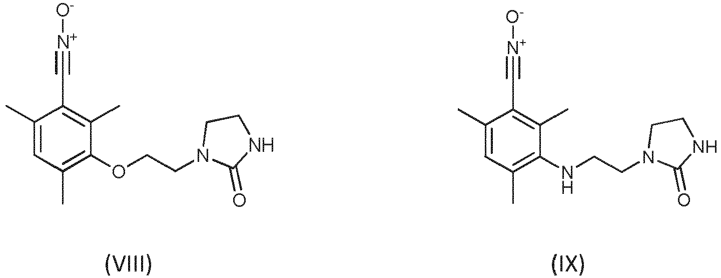

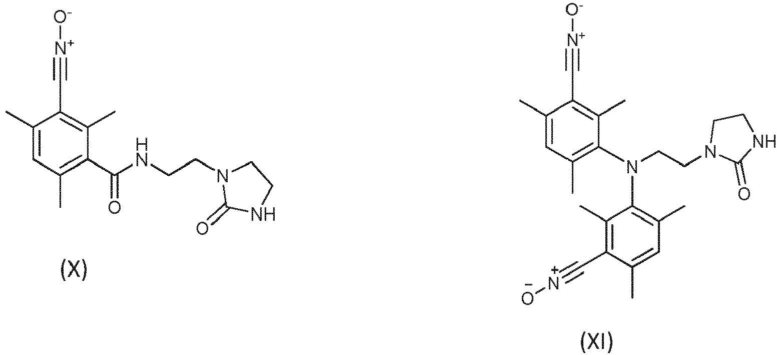

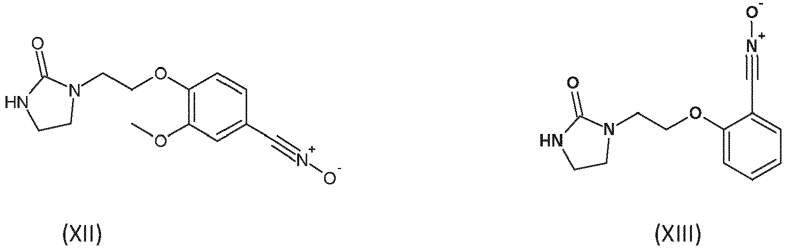

10. Composition according to any one of Claims 1 to 5, in which Q contains a -C=N→O-unit, preferably comprises the unit corresponding to the formula (XIV) or (XV): 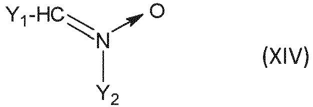 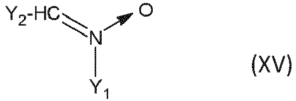 where:
Y₁ is an aliphatic group, preferentially an alkyl group preferably containing from 1 to 12 carbon atoms, or a group containing from 6 to 20 carbon atoms and comprising an aromatic unit, preferably an aryl or alkylaryl group, more preferably a phenyl or tolyl group,
and Y₂ is an aliphatic group, preferentially a saturated hydrocarbon group preferably containing from 1 to 12 carbon atoms, or a group comprising an aromatic unit and preferably containing from 6 to 20 carbon atoms, Y₂ comprising a direct attachment to B.

11. Composition according to any one of Claims 1 to 10, in which the reinforcing filler comprises a reinforcing inorganic filler, preferably a silica, which reinforcing inorganic filler preferably represents more than 50% by weight of the reinforcing filler.

12. Composition according to any one of Claims 1 to 11, in which the acid is a Lewis acid, preferably is selected from the group consisting of InCl₃, MgBr₂, SnCl₂, Ti(OR²)₄, TiO₂, Al(OR²)₃, FeCl₃, Yb(OTf) and ZnCl₂, R² denoting a hydrogen atom, an alkyl group of 1 to 6 carbon atoms, an acyl group R³CO with R³ an alkyl of 1 to 7 carbon atoms or a triflyl group CF₃SO₂, Tf representing the triflate group, more preferably is Ti(OR²)₄, TiO₂ or Al(OR²)₃,.

13. Composition according to any one of Claims 1 to 12, in which the monodentate ligand is a halide, an alkoxide group R¹O with R¹ an alkyl preferably having from 1 to 6 carbon atoms, a carboxylate group R¹COO with R¹ an alkyl preferably having from 1 to 7 atoms or a triflate group.

14. Composition according to any one of Claims 1 to 12, in which the bidentate ligand is the enolate of a 1,3-diketone.

15. Tyre which comprises a rubber composition defined in any one of Claims 1 to 14.
